# EUROPÄISCHE PATENTSCHRIFT

(11) **EP 3 010 726 B1**
(45) Veröffentlichungstag und Bekanntmachung des Hinweises auf die Patenterteilung: **06.12.2017**
(21) Anmeldenummer: 14729362.5
(22) Anmeldetag: 12.06.2014
(51) Int. Cl.: B60B 33/00, B60B 19/12, B62D 51/04, B62B 3/06, B62B 3/14, B62B 5/00

(54) **ROLLE MIT ANGETRIEBENEN RAD UND LASTWAGEN MIT EINER EIN ANGETRIEBENES RAD AUFWEISENDER ROLLE UND BEDIENEINHEIT**
ROLLER HAVING A DRIVEN WHEEL, LOAD TRUCK COMPRISING A ROLLER HAVING A DRIVEN WHEEL AND OPERATING DEVICE
ROULEAU POURVU D'UNE ROUE ENTRAÎNÉE, CHARIOT POURVU D'UN ROULEAU PRÉSENTANT UNE ROUE ENTRAÎNÉE ET APPAREIL DE COMMANDE

(30) Priorität: 19.06.2013 DE 102013106381; 06.06.2014 DE 102014108002
(43) Veröffentlichungstag der Anmeldung: 27.04.2016
(73) Patentinhaber: Tente GmbH & Co. KG, 42929 Wermelskirchen (DE)
(72) Erfinder: BLOCK, Wolfgang, 42929 Wermelskirchen (DE)
(74) Vertreter: Müller, Enno
(86) Internationale Anmeldenummer: PCT/EP2014/062231
(87) Internationale Veröffentlichungsnummer: WO 2014/202454

(56) Entgegenhaltungen:
- WO-A1-99/04122
- CN-U- 202 933 165
- DE-A1- 19 614 411
- US-A1- 2005 034 912
- US-A1- 2006 016 628
- US-B1- 6 276 471

## Beschreibung

Die Erfindung betrifft zunächst eine Rolle mit einem durch einen Elektromotor angetriebenen Rad mit einer Radachse, wobei der Elektromotor ein Nabenmotor ist, der einen sich mit Umfangsabstand und umgebend zu der Radachse erstreckenden Nabenkörper relativ zu der feststehenden Radachse antreibt, wobei weiter das Rad eine Lauffläche aufweist.
Gegenstand der Erfindung ist weiter ein auch von Hand verfahrbarer Lastenwagen mit einem oder mehreren Rollen, von denen mindestens eine ein angetriebenes Rad aufweist.
Derartige mit einem Elektromotor angetriebene Räder aufweisende Rollen, die nachstehend auch als angetriebene Rollen bezeichnet sind, sind bereits in verschiedener Hinsicht bekannt worden. Es wird beispielsweise auf die WO 2007/093549 A1 (US 2010/0181122 A1) und die WO 2012/110283 A1 verwiesen.
Bei den aus den genannten Schriften bekannten angetriebenen Rollen ist der zum Antrieb vorgesehene Elektromotor mit dem Rad, aber außerhalb zu dem Rad, auf einer gemeinsamen Welle angeordnet. Im Weiteren sind auch bereits, insbesondere im Zusammenhang mit elektromotorisch angetriebenen Fahrrädern, Nabenmotoren bekannt geworden. Hierbei ist der Elektromotor in der Nabe des Rades aufgenommen.
Zum Stand der Technik ist weiter auf die US 2005/0034912 A1 zu verweisen. Der hieraus bekannte Nabenmotor weist eine drehende Achse auf, bei relativ dazu stehendem Motor bzw. Außenläufer. Aus der US 6,276,471 B1 ist eine Rolle mit einem Rad bekannt, bei welchem der Antrieb über einen Nabenmotor erfolgt. Schließlich ist aus der WO-A-99/04122 ein Nabenmotor mit einem sich im Umfangsabstand und umgebend zu der Radachse erstreckenden Nabenkörper bekannt, der relativ zu der feststehenden Radachse angetrieben ist, wobei das Rad eine integral ausgebildete Lauffläche aufweist.

Bezüglich Nabenmotoren besteht aber eine Schwierigkeit, bezogen auf Rollen wie sie beispielsweise für von Hand auch verschiebbare Lastenwagen vorgesehen werden, eine einen Reifen oder eine Lauffläche beinhaltende Gesamtkonstruktion eines Rades anzugeben, die nicht zu groß bauend ist.

Ausgehend von dem genannten Stand der Technik beschäftigt sich die Erfindung mit der Aufgabe, eine angetriebene Rolle mit einem Elektromotor anzugeben, die einen günstigen Aufbau aufweist.

Nach einer ersten Lehre der Erfindung ist diese Aufgabe beim Gegenstand des Anspruches 1 gelöst, wobei darauf abgestellt ist, dass die Lauffläche des Rades auf einem Laufflächenträger ausgebildet ist und der Laufflächenträger rückseitig zu der Lauffläche auf dem Nabenkörper flächig abgestützt ist. Der Nabenkörper kann so uneingeschränkt für die Aufnahme der Komponenten des Elektromotors genutzt sein. Die unmittelbare flächige Abstützung des Laufflächenträgers auf dem Nabenkörper ermöglicht eine hohe Stabilität bei zugleich kompakter Bauform.

Hinsichtlich eines Lastenwagens ist insbesondere ein solcher angesprochen, der gewöhnlich von einem Nutzer von Hand geschoben oder gezogen wird. Es besteht aber ein Bedürfnis, insbesondere bei hohen Lasten, diesen Lastenwagen auch motorisch bewegen zu können. Hierzu sieht die Erfindung nun vor, dass der Lastenwagen mit einer motorisch angetriebenen Rolle in einer der Ausgestaltungen wie sie hier beschrieben ist, versehen ist.

Insbesondere ist auch bevorzugt, dass der Lastenwagen gleichwohl noch von Hand verfahrbar ist. Etwa wenn die motorisch angetriebene Rolle nicht eingeschaltet ist oder zusätzlich, sodass man über eine Freilaufkupplung auch von Hand gegebenenfalls den Lastenwagen schneller bewegen kann als es dem Antrieb entspricht. Hierbei kann, insbesondere bei einem Nabenmotor, die Freilaufkupplung konstruktionsbedingt gegeben sein, also kein besonderes Bauelement erfordern.

Ein solcher mit einer elektromotorisch bewegten Rolle ausgestatteter Lastenwagen ist bevorzugt auch steuerbar. Dies im Hinblick auf die Geschwindigkeit der so angetriebenen Rolle bzw. im Hinblick auf ein Einschalten und Ausschalten der angetriebenen Rolle bzw. des darin befindlichen Rades.

Es ist zunächst bevorzugt, dass der Laufflächenträger des Rades topfartig ausgebildet ist, wobei ein Topfboden sich außenseitig zu dem Nabenkörper und im Wesentlichen rechtwinklig zu der Radachse erstreckt.

Der Nabenkörper selbst hat bevorzugt auch eine im Wesentlichen zylindrische Gestaltung, wobei Zylinderabschnitte unterschiedlichen Durchmessers hintereinander, in Richtung der Rollenachse gesehen, ausgebildet sein können.

Der topfartig ausgebildete Laufflächenträger kann nun einseitig im Übergriff zu dem Nabenkörper angeordnet sein. Eine Topfwandung ist hierbei im Übergriff zu einer Umfangswandung des Nabenkörpers und der Topfboden erstreckt sich etwa gleichgerichtet zu einer Nabenseitenfläche.

Bei einem derartigen Nabenmotor kann es, je nach Auslegeleistung und abgeforderter Leistung, zu einer erheblichen Wärmeentwicklung kommen. Um die Wärme günstig ableiten zu können, sieht eine Maßnahme vor, eine Außenfläche des Laufflächenträgers mit Rippen auszubilden. Hierbei empfiehlt es sich, die Lauffläche selbst in ihrer Breite kleiner als die Breite des Nabenkörpers insgesamt, gesehen in Richtung der Radachse auszubilden. Somit verbleibt in Umfangsrichtung ein Teilbereich des Laufflächenträgers, der zu der genannten Ausbildung der Rippen genutzt sein kann.

Darüber hinaus ist auch bevorzugt, dass der Nabenkörper auch in dem Bereich, in dem er nicht von dem Laufflächenträger überdeckt ist, mit Rippen ausgebildet ist, insbesondere sich in Umfangsrichtung erstreckenden Rippen.

Ergänzend oder alternativ kann der Nabenkörper, insbesondere in seinem in Richtung der Radachse weisenden Bereich, auch mit Rippen ausgebildet sein. Diese lassen dann einen Luftweg unmittelbar zu dem Elektromotor. Der Elektromotor kann in diesem Zusammenhang, aber auch unabhängig davon, als vollständig gekapselter Elektromotor ausgebildet sein.

Die Lauffläche selbst kann auf dem Laufflächenträger beispielsweise aufvulkanisiert sein. Somit ist gleichsam ein Topfteil mit einem an der Topfwandung außenseitig umlaufenden Gummiring oder dergleichen gebildet.

Die Lauffläche kann auch im Kunststoffspritzverfahren aufgespritzt sein. Sie kann bspw. aus Polyurethan, auch einem Gießpolyurethan, bestehen. Darüber hinaus kann die Lauffläche auch aus einem thermoplastischen Elastomer bestehen.

Weiter ist die Rolle bevorzugt mit einer Rollengabel ausgestattet, wobei diese aus einem Blechteil gebildet ist, das eine Breite aufweist, die dem zehnfachen oder mehr, bis hin beispielsweise zum zweihundert- oder dreihundertfachen einer Dicke des Blechteils entspricht. Wesentlich ist, dass ein, ggf. auch vergleichsweise dünnes, Blech gabelförmig geformt ist und an beispielsweise der Rollenachse mit der Rolle verbunden ist. Hierdurch kann im Bereich der Verbindung mit der Rolle auch eine wärmeleitende Verbindung gegeben sein, sodass Wärme auch über die damit geschaffene vergleichsweise große Fläche der Gabel abgegeben werden kann.

In weiterer Ausgestaltung kann vorgesehen sein, dass die Rollengabel U-förmig gebildet ist. Ein U-Steg erstreckt sich dann in Benutzung oberhalb der Rollenachse und etwa in einer Ebene, die praktisch parallel zu einer Horizontalebene, in der die Rollenachse verläuft, gegeben ist. Die U-Schenkel der Rollengabel verlaufen im Wesentlichen senkrecht zu dem U-Steg.

Im Weiteren ist bevorzugt, dass die Rolle ein horizontal ausgerichtetes Umfassungsteil aufweist. Dieses soll die Rolle zumindest über einen Bereich von 180° umgeben. Zum einen kann hiermit eine Art Stoßsicherung gebildet sein, sodass bei einer Berührung mit einem Fremdteil dieses Umfassungsteil in Berührung kommt und nicht die Rolle selbst. Hierdurch kann beispielsweise ein bei elektromotorischem Betrieb unerwünschtes Auffahren der Rolle auf einen solchen Gegenstand vermieden werden. Hierdurch könnte es zu einem einseitigen Anheben der Ladefläche kommen und damit ersichtlich zu einem Verrutschen von Ladung.

Unabhängig oder ergänzend hierzu ist das Umfassungsteil aber auch als Fußschutz wesentlich, um ein versehentliches Überrollen eines Fußes möglichst zu vermeiden.

Das genannte Umfassungsteil ist bevorzugt in gleicher Weise aus einem dünnen Blechteil gebildet. Da das Umfassungsteil jedenfalls mit der Rollengabel verbunden ist, ergibt sich hier auch eine wärmeleitende Verbindung, sodass auch das Umfassungsteil ergänzend zur Wärmeableitung dienlich sein kann.

Weiter bevorzugt umgibt das Umfassungsteil, gesehen in einer Draufsicht, die Rolle auf dem gesamten Umfang.

In Höhenrichtung erstreckt sich das Umfassungsteil bevorzugt nur über einen Teil der Höhe der Rollengabel. Zwischen der Rollengabel und dem Umfassungsteil bleibt somit ein Freiraum, durch welchen beispielsweise die Rolle unmittelbar sichtbar bleibt.

Der Nabenmotor bedarf ersichtlich einer Energieversorgung, die üblicherweise über einen an dem Gerät, an dem eine solche Rolle angebracht ist, vorgesehenen Akkumulator sichergestellt ist. Um entsprechende Stromleitungen und auch Steuerleitungen zu dem Elektromotor zu führen, ist bevorzugt eine elektrische Schnittstelle vorgesehen. Diese kann an dem Umfassungsteil oder der Rollengabel ausgebildet sein. Die Schnittstelle ist weiter bevorzugt als Steckeraufnahme ausgebildet. Somit ist die genannte Rolle insgesamt als lediglich über einen Stecker noch zu verbindendes Gesamtteil ausgebildet.

Ein die Schnittstelle mit dem Elektromotor verbindendes Kabel kann innenseitig des Umfassungsteils oder der Rollengabel verlaufen. Das Kabel kann hieran durch Schellen angebunden sein, angeklebt sein oder in sonstiger Weise verbunden. Hierdurch verläuft jedenfalls das Kabel im Hinblick auf äußere Einwirkungen in einem geschützten Bereich.

Die Teile des Nabenmotors, hinsichtlich eines den Motor einschließenden Kapselkörpers insbesondere, und/ oder der Laufflächenträger und/oder der Nabenkörper bestehen bevorzugt aus Aluminium, bspw. Aluminiumdruckguss. Hierdurch kann auch eine gewünschte Salzwasserbeständigkeit erreicht sein. Wenn auch die Rollengabel und/oder das Umfassungsteil bevorzugt aus einem Stahlblech bestehen, kann hierzu grundsätzlich auch ein Aluminiumteil Verwendung finden.

Hinsichtlich des von Hand verfahrbaren Lastenwagens ist in weiterer Einzelheit vorgesehen, dass eine angetriebene Rolle hinsichtlich einer Leistungsabgabe des Elektromotors steuerbar ist. So kann eine Geschwindigkeit, mit welcher eine solche angetriebene verfahrbare Rolle den Lastenwagen verfahren kann, beeinflusst werden. Hierzu ist weiter bevorzugt an dem Lastenwagen ein Bediengerät angeordnet.

Darüber hinaus bevorzugt sind auch an einem solchen Lastenwagen zwei angetriebene Rollen vorgesehen. Bevorzugt, wenn beispielsweise vier Rollen insgesamt vorgesehen sind, handelt es sich um zwei vordere oder zwei hintere Rollen bezogen auf eine übliche Verfahrrichtung des Lastenwagens, die angetrieben sind.

Wenn mehrere angetriebene Rollen vorgesehen sind, zumindest zwei angetriebene Rollen, ist auch bevorzugt, dass zwei der angetriebenen Rollen unabhängig voneinander steuerbar sind. So kann etwa bei der genannten Nebeneinanderanordnung der angetriebenen Rollen bei Antrieb nur einer der beiden Rollen eine Kurvenfahrt ausgelöst werden, wobei dann die nicht oder weniger angetriebene Rolle sich im Kurveninneren befindet. Denn hinsichtlich Kurvenfahrten ist es bevorzugt, dass auch die kurveninnere Rolle angetrieben ist, nur mit geringerer Geschwindigkeit.

Ein derartiger Lastenwagen ist üblicherweise mit einem Handhabungsbügel ausgebildet. Insofern ist bevorzugt, dass ein Bediengerät an dem Handhabungsbügel angebracht ist.

In weiterer Einzelheit ist das Bediengerät bevorzugt an den Handhabungsbügel besonders angepasst. Dies dadurch, dass es eine Durchsetzungsöffnung aufweist, welche von dem Handhabungsbügel durchsetzt werden kann. Das Bediengerät kann also einfach auf einen Handhabungsbügel, etwa wenn dieser freikragend ist oder zur Montage entsprechend geöffnet ist, aufgeschoben werden. Es ist damit schon von sich aus an dem Handhabungsbügel gefesselt.

Es kann dann weiter in üblicher Weise, etwa durch eine Schelle oder dergleichen fest an dem Handhabungsbügel befestigt sein. Es kann auch mehrteilig, etwa in Form von zwei fügbaren Teilen, etwa beispielsweise Halbschalen, hierzu ausgebildet sein. Die fügbaren Teile bilden bevorzugt die Durchgangsöffnung. Zur Festlegung des Bedienteiles an dem Handhabungsbügel können die fügbaren Teile gegeneinander verspannt sein, beispielsweise mittels einer Verschraubung, wobei die Schrauben den Handhabungsbügel durchsetzen können.

Hinsichtlich des sich im Wesentlichen kreisringförmig zu dem Handhabungsbügel erstreckenden Bediengerätes kann nur ein Teil eines solchen kreisringförmigen Körpers zur Unterbringung der tatsächlichen Steuerelemente genutzt sein.

Ein solches Bediengerät kann auch ein, bevorzugt zwei Stellteile, beispielsweise Steuertasten aufweisen. In diesem Zusammenhang ist es bevorzugt, dass ein Stellteil als Drehtaste ausgebildet ist, wobei eine Drehachse mit einer Mittelachse des Handhabungsbügels zusammenfällt. Bevorzugt ist ein solches Stellteil relativ zu dem im Übrigen feststehenden Bediengerät bewegbar vorgesehen, beispielsweise drehbar oder schiebeverlagerbar.

Bevorzugt ist ein Stellteil kreisförmig bezüglich einer Längsachse der Durchgangsöffnung bewegbar. So kann das Stellteil in einer beispielhaften Ausgestaltung um einen Winkel von 5 bis 90°, bevorzugt 5 bis 30° um die Längsachse des Bediengeräts, insbesondere um die Längsachse des Handhabungsbügels bewegt werden.

Bevorzugt sind in Richtung der Längsachse zwei gesonderte Stellteile vorgesehen, mit einem dazwischen befindlichen, feststehenden Teil des Bediengeräts. Beide Stellteile sind bevorzugt ergonomisch günstig an dem Handhabungsbügel positioniert, so insbesondere ausgelegt zur Daumenbetätigung.

Der feststehende Teil des Bediengeräts kann einen inneren Schalterabschnitt aufweisen, zur Zusammenwirkung mit einem Stellteil. Bevorzugt weist das Bediengerät zwei derartiger Schalterabschnitte für jeweils ein Stellteil auf. Das Stellteil kann hierbei relativ zu dem Schalterabschnitt verdrehbar angeordnet sein. Es ist entsprechend bevorzugt ein Schalterabschnitt vorgesehen, der eine Drehwinkelstellung des Stellteiles relativ zu einer Ausgangsstellung erfasst.

Weiter auf Seite 10, oben der ursprünglich eingereichten Unterlagen.

Das Stellteil kann weiter eine sich in Richtung der Längsachse erstreckende, von radial außen zugängliche Eingriffshöhlung aufweisen. Diese dient bevorzugt zur Umfassung des Handhabungsbügels, kann darüber hinaus einen der Durchgangsöffnung des Bediengerätes im allgemeinen angepassten Durchmesser aufweisen.

Als insbesondere bedienungsvorteilhaft erweist sich eine Ausgestaltung, bei welcher das Stellteil in eine Ausgangsstellung federvorgespannt ist. So kann bei einem verdrehbaren Stellteil zufolge der Anordnung oder Ausbildung einer Feder eine Drehrückstellung des Stellteiles nach Aufhebung der Drehbeaufschlagung durch den Benutzer in die Ausgangsstellung erfolgen. Die Ausgangsstellung kann eine anschlagbegrenzte Stellung sein. Entsprechend wird mit einem Loslassen des oder der Stellteile, weiter insbesondere auch verbunden mit einem Loslassen des Handhabungsbügels des Lastenwagens, die Ansteuerung des einen oder der mehreren angetriebenen Räder unterbunden.

In einer Ausgestaltung ist das Stellteil ausgehend von der Ausgangsstellung in zwei entgegengesetzte Richtungen bewegbar, bevorzugt drehbewegbar. Die Ausgangsstellung kann hierbei durch Anordnung zweier entgegengerichtet wirkender, bevorzugt gleich starker Federn definiert sein. Es können übliche Metallfedern, wie beispielsweise Blattfedern oder Schrauben-Druckfedern vorgesehen sein. Auch kann eine Feder Bestandteil des im Übrigen feststehenden Teils des Bediengerätes sein, so beispielsweise zufolge Ausbildung eines Kunststoff-Federarms bei Ausbildung des Bediengeräts beziehungsweise eines fügbaren Teils des Bediengeräts als Kunststoff-Spritzteil. Auch kann die Feder als solches ein Kunststoff-Spritzteil sein, welches dem feststehenden Teil des Bediengeräts zuordbar ist. Darüber hinaus kann die Feder auch Bestandteil des Stellteils sein, zur Zusammenwirkung mit einem Festteil des Bediengerätes.

Ausgehend von der Ausgangsstellung ist das Stellteil bevorzugt über gleiche Drehwinkel in die beiden entgegengesetzten Richtungen bewegbar, so beispielsweise zur Aktivierung einer Vorwärtsfahrt bei Drehverlagerung des Stellteils in die eine Richtung und bei Drehverlagerung des Stellteils in die entgegengesetzte Richtung zur Aktivierung einer Rückwärtsfahrt.

Bevorzugt weist das Bediengerät eine Steuerungselektronik auf. Diese Steuerungselektronik beinhaltet insbesondere eine Winkel-Auswertung der bewegbaren Stellteile und eine Kommunikationseinrichtung mit der Steuerung des Motors in dem oder den antreibbaren Rädern. Bevorzugt kommuniziert das Bediengerät über ein Bus-System mit der Motorsteuerung.

Sind zwei antreibbare Räder vorgesehen, so beinhaltet ein Rad bevorzugt eine Master-Steuerung und das andere Rad eine Slave-Steuerung. Die Master-Steuerung kommuniziert mit dem Bediengerät und wertet dessen Signale aus.

Das Bediengerät kann auch eine Akkumulator-Ladeanzeige aufweisen. Es kann weiter mit einer Not-Aus-Taste versehen sein. Insbesondere einer Pralltaste. Etwa auch zur Erreichung eines Einklemmschutzes. Mit der Pralltaste kann ein evtl. noch laufender Motor einer angetriebenen Rolle ausgeschaltet werden.

Das Bediengerät kann auch ein Schloss aufweisen, so dass der Lastenwagen mittels des Bediengerätes nur mit einem entsprechenden Schlüssel gestartet und betrieben werden kann. Alternativ oder ergänzend können auch Sensoren etwa in Form eines RFID-Sensors vorgesehen sein, mit dem eine Bedienperson sich dann bspw. noch gesondert auszuweisen hat.

Hinsichtlich einer elektrischen Verbindung zwischen einer angetriebenen Rolle und dem Bediengerät ist weiter bevorzugt vorgesehen, dass diese zumindest über einen wesentlichen Teil innerhalb des Handhabungsbügels verlegt ist. In weiterer Einzelheit ist bevorzugt, dass die Verbindung zwischen dem Bediengerät und einem beispielsweise hierzu vorgesehenen Elektrokabel innenseitig des Bediengerätes erfolgt, sodass eine Kabeldurchführung von außen nicht erkennbar ist. Dies bedeutet zugleich, dass auch eine Geschütztlage erreicht ist für eine derartige elektrische Verbindung, sodass im mitunter rauen Betrieb, welchem ein derartiger Lastenwagen ausgesetzt ist, eine Beschädigung der elektrischen Verbindung vorgebeugt ist.

Elektrisch zwischen dem Bediengerät und mindestens einer angetriebenen Rolle ist bevorzugt ein Verbindungsgehäuse vorgesehen, in dem der eine Motor oder die mehreren Motoren, das Bediengerät und die weiter bevorzugt zugleich in diesem Gehäuse vorgesehene Batterie miteinander verdrahtet sind.

Bevorzugt ist auch, dass in dem Motor einer angetriebenen Rolle eine Steuerungsplatine, insbesondere bspw. mit einem Mikroprozessor, enthalten ist. Die elektrische und Steuerungsverbindung zu dem Bediengerät kann über ein Bus-system gegeben sein. In dem Bediengerät selbst braucht nur eine Platine zur Durchführung dieser entsprechenden Kommunikation angeordnet zu sein.

Hinsichtlich des Bediengerätes weist dieses bevorzugt auch eines oder mehrere der Merkmale auf, wie sie vorstehend schon im Zusammenhang mit dem Lastenwagen beschrieben worden sind.

Nachstehend ist die Erfindung des Weiteren anhand der beigefügten Zeichnungen, die jedoch lediglich Ausführungsbeispiele darstellen, erläutert. Hierbei zeigt:
- Fig. 1: eine schematische perspektivische Ansicht eines Lastenwagens mit zwei angetriebenen elektrischen Rollen;
- Fig. 2: eine perspektivische Ansicht einer angetriebenen elektrischen Rolle in Alleinstellung;
- Fig. 3: eine Seitenansicht der Rolle gemäß Figur 2;
- Fig. 4: eine Draufsicht der Rolle gemäß Figur 2 bzw. Figur 3;
- Fig. 5: einen Querschnitt durch die Rolle gemäß Figur 2, geschnitten entlang der Linie V-V;
- Fig. 6: eine perspektivische Darstellung eines Bediengerätes;
- Fig. 7: eine perspektivische Darstellung einer, einer Kabelführung dienenden Umfassung;
- Fig. 8: den Schnitt gemäß der Linie VIII-VIII in Figur 7;

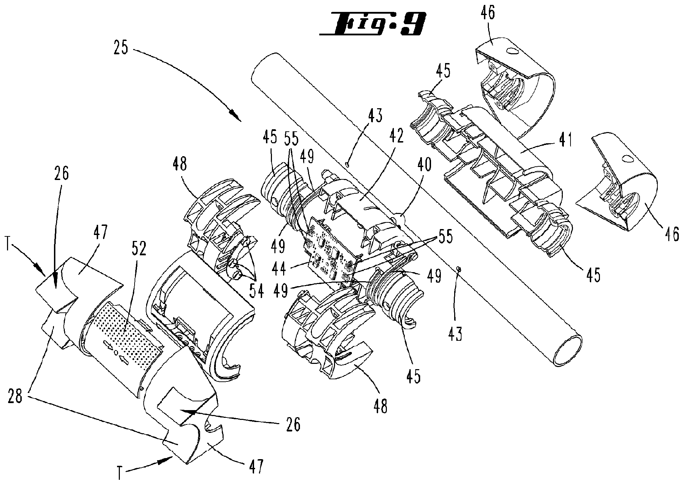

- Fig. 9: eine explosionsperspektivische Darstellung des Bediengerätes;
- Fig. 10: das Bediengerät in geschnittener Perspektivdarstellung;

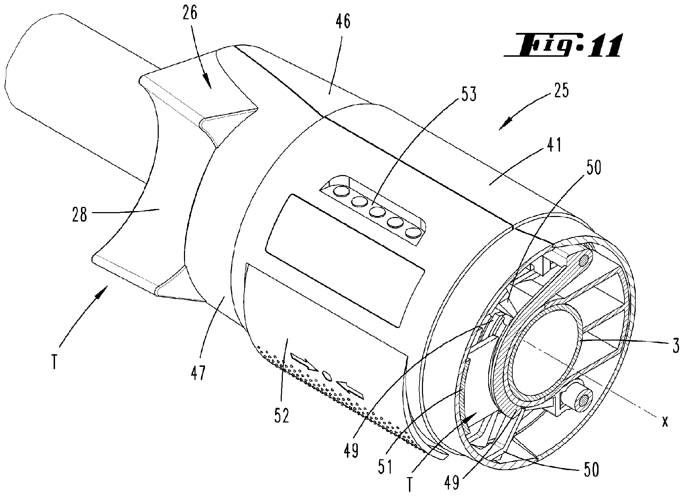

- Fig. 11: eine Darstellung gemäß Figur 10, bei in Achsrichtung versetztem Schnitt.

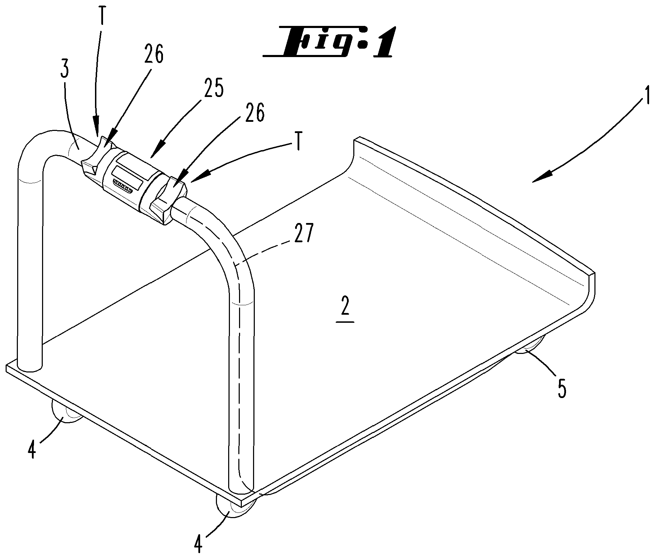

Dargestellt und beschrieben ist mit Bezug zu Figur 1 ein Lastenwagen 1, der eine Ladefläche 2 und einen zum Verfahren dienenden Handhabungsbügel 3 aufweist. Unterhalb der Ladefläche 2 sind beim Ausführungsbeispiel vier Rollen angeordnet, von denen zwei Rollen 4 nicht angetriebene übliche Verfahrrollen sind und zwei Rollen 5 über einen Nabenmotor elektrisch angetriebene Räder 31 verfügen.

Eine elektrisch angetriebene Rolle 5 ist bevorzugt als Bockrolle ausgebildet. Die nicht angetriebenen Rollen 4 können beim Ausführungsbeispiel als Lenkrollen ausgebildet sein.

Ersichtlich sind die angetriebenen Rollen 5 in üblicher Verfahrrichtung bezüglich des Lastenwagen 1 vorne angeordnet. Sie können also den Lastenwagen ziehen.

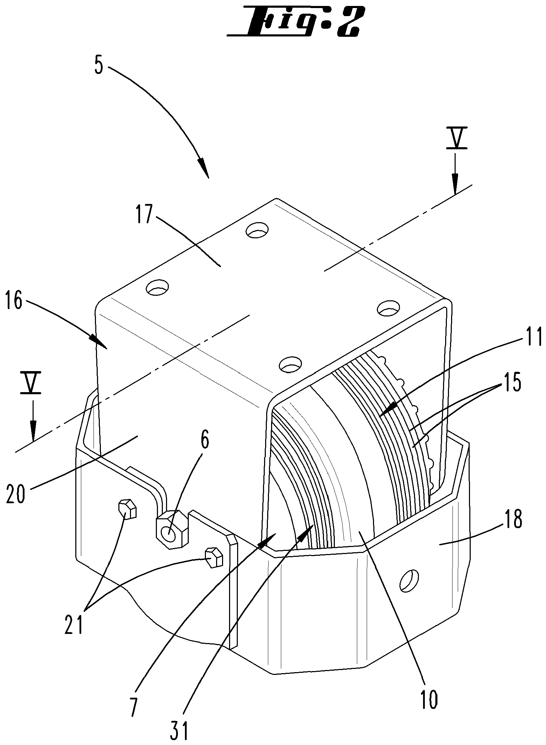

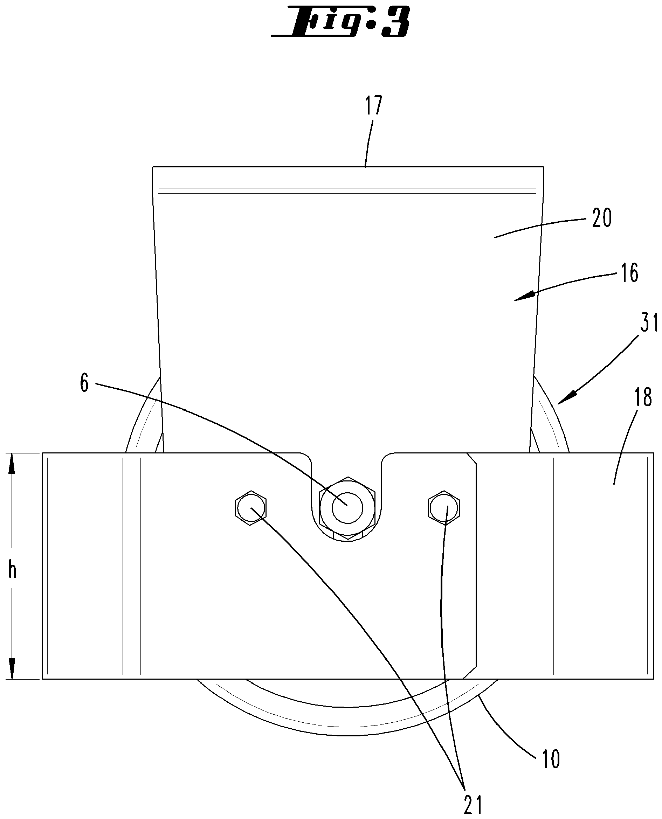

Wie sich in weiterer Einzelheit aus den Figuren 2 bis 5 ergibt, weist eine angetriebene elektrische Rolle 5 ein Rad 31 und eine Radachse 6 auf, auf welcher ein Nabenkörper 7 angeordnet ist. Innerhalb des Nabenkörpers 7 sind die Funktionsteile für einen elektrischen Antrieb angeordnet, was hier in weiterer Einzelheit nicht dargestellt und ausgeführt ist.

Der Nabenkörper 7 ist ersichtlich im Wesentlichen zylindrisch gebildet, mit zwei sich im Wesentlichen rechtwinklig zu der Erstreckung der Radachse 6 erstreckenden Seitenwänden 8 und einer Umfangswand 9.

Auf der Umfangswand 9 ist eine Lauffläche 10 angeordnet, wobei die Lauffläche 10 Teil eines Laufflächenträgers 11 ist, der zumindest über einen Teil seiner Erstreckung in Richtung der Radachse 6, siehe bei 12 aufeinanderliegende Flächen, in unmittelbarem flächigen Kontakt mit einer Außenseite der Umfangswand 9 des Nabenkörpers 7 ist.

Der Laufflächenträger 11 ist im Wesentlichen topfartig ausgebildet, mit einer Topfwandung 13 und einem Topfboden 14.

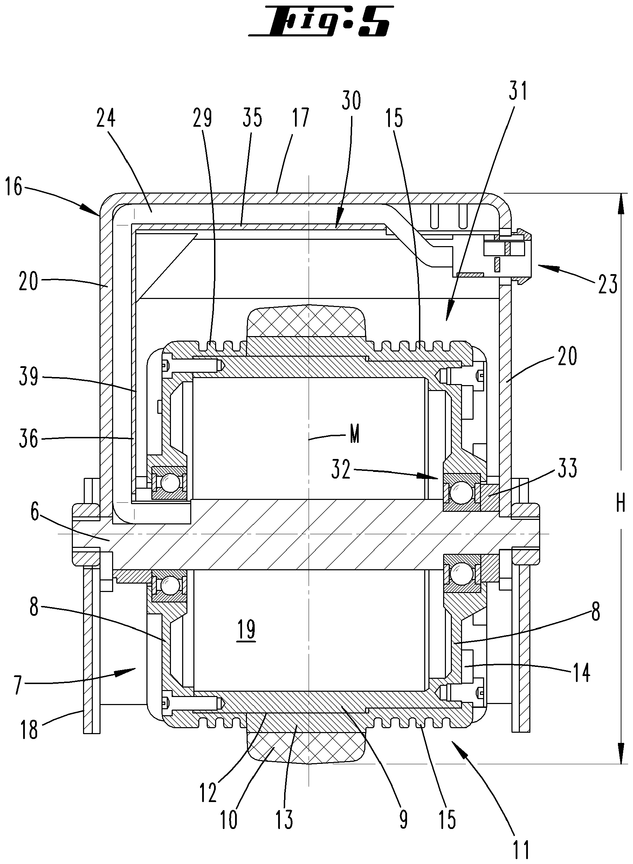

Der Topfboden 14 übergreift eine der Seitenwände 8 des Nabenkörpers 7. Die Topfwandung 13 reicht bezüglich einer quer zu der Radachse 6 verlaufenden Längsmittelebene M, gesehen von dem Topfboden 14, bis über diese Mittelebene M hinaus. Die Lauffläche 10 ist bevorzugt mittig bezogen auf ihre in Figur 5 ersichtliche Breitenerstreckung von der Längsmittelebene M durchsetzt.

Der Nabenkörper 7 selbst besteht bevorzugt auch aus einem Topfteil, das die Umfangswand 9 und eine der Seitenwände 8, beim Ausführungsbeispiel die von dem Topfboden 14 übergriffene Seitenwand 8, umfasst. Dieses Topfteil des Nabenkörpers 7 ist öffnungsseitig, bezüglich eines Stirnrandes der Topfwandung, von einem weiteren Topfteil umfasst. Dieses weitere Topfteil weist als Topfboden die weitere Seitenwand 8 auf und einen durch die Topfwandung gebildeten Übergreifabschnitt 29.

An dem Laufflächenträger 11, bevorzugt einseitig zu der Lauffläche 10, sind Umfangsrippen 15 ausgeformt, welche der Wärmeabfuhr dienen. Durch die bevorzugt auch in diesem Bereich gegebene flächige Aneinanderlage mit der im Querschnitt darunter befindlichen Umfangswand 9 ergibt sich eine gute Wärmeleitung und spätere Wärmeabgabe über die genannten Umfangsrippen 15.

Der Übergreifabschnitt 29 des Nabenkörpers selbst ist ersichtlich bevorzugt auch mit derartigen Umfangsrippen ausgebildet. Diese sind dann andersseitig zu der Lauffläche 10 angeordnet.

Die Rolle 5 weist weiter eine Rollengabel 16 auf. Die Rollengabel 16 umgibt das Rad 31 U-förmig, wobei der U-Steg 17 im Nutzungszustand der Rolle oberhalb und etwa parallel ausgerichtet zu einer die Radachse 6 durchsetzenden Horizontalebene verläuft.

Die Rollengabel 16 besteht aus einem dünnen Blechteil, wobei der zu der Rollengabel gebogene Blechstreifen eine Breite von beispielsweise 8 bis 16 cm aufweisen kann, bei einer Dicke von 0,2 bis 0,7 oder ggf. bis hin zu 4 mm des Bleches.

Weiter weist die Rolle 5 ein im Wesentlichen horizontal ausgerichtet verlaufendes Umfassungsteil 18 auf. Auch das Umfassungsteil 18 besteht aus einem wie angegebenen Blech. Das Umfassungsteil 18 erstreckt sich ersichtlich in horizontaler Richtung vollständig um den Nabenmotor 19 bzw. das insgesamt auch mit der Lauffläche versehene diesbezügliche Rad- bzw. Rollenteil.

Das Umfassungsteil 18 weist eine vertikale Höhe h, bezogen auf einen üblichen Benutzungszustand, von 4 bis 12 cm auf.

Es ergibt sich ein umlaufendes Blechband, das insbesondere auch einen Schutz vor einem unmittelbaren Kontakt der Lauffläche mit im Wege stehenden Gegenstände erbringen kann. Das Blechband selbst kann insbesondere zweiteilig ausgebildet sein, bestehend aus zwei U-förmigen Teilen (bezogen auf eine Draufsicht).

Darüber hinaus ist das Umfassungsteil 18 durch flächige Anlage im Bereich eines oder beider U-Schenkel 20 der Rollengabel 16 mit dieser in wärmeleitendem Kontakt, sodass auch über das Umfassungsteil 18 zusätzlich Wärme abführbar ist.

Das Umfassungsteil 18 ist in weiterer Einzelheit mittels jeweils zwei an einem U-Schenkel vorgesehenen Verbindungsschrauben 21 mit der Rollengabel 16 verbunden.

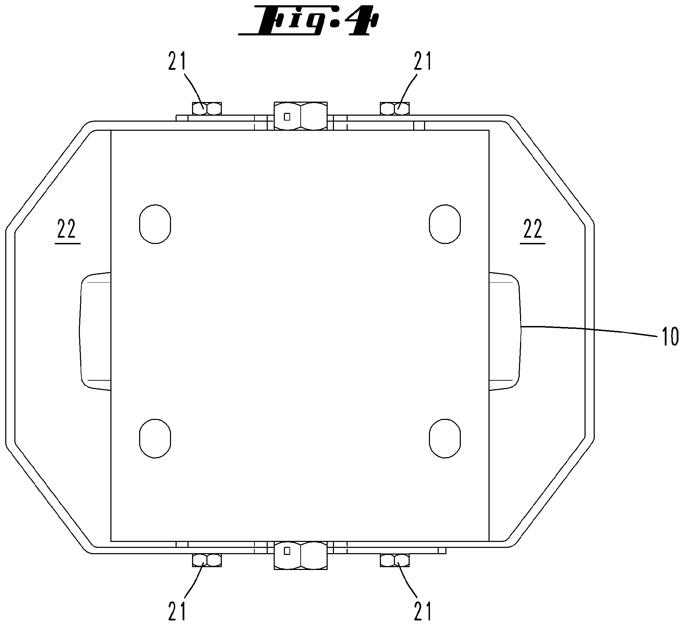

Dadurch, dass sich das Umfassungsteil 18 nur über einen Teil der Höhe H der Rolle erstreckt, bleibt eine Sichtöffnung 22, siehe etwa Figur 4, zwischen der Rollengabel 16 und dem Umfassungsteil 18.

Die Rolle 5 weist weiter eine Elektroschnittstelle 23 auf, die in Form einer Steckeraufnahme ausgebildet ist und an einer Seitenfläche der Rollengabel 16, also im Bereich eines U-Steges 17 der Rollengabel 16, freiliegt. Innenseitig setzt sich die Elektroschnittstelle 23 in ein Kabel 24 fort, das in Überdeckung zu der Rollengabel 16 geführt ist und in die betrieblich feststehende Rollenachse 6 einläuft. Das Kabel 24 kann durch eine innenseitig der Gabel 16 ausgebildete Umfassung 30 gehaltert sein.

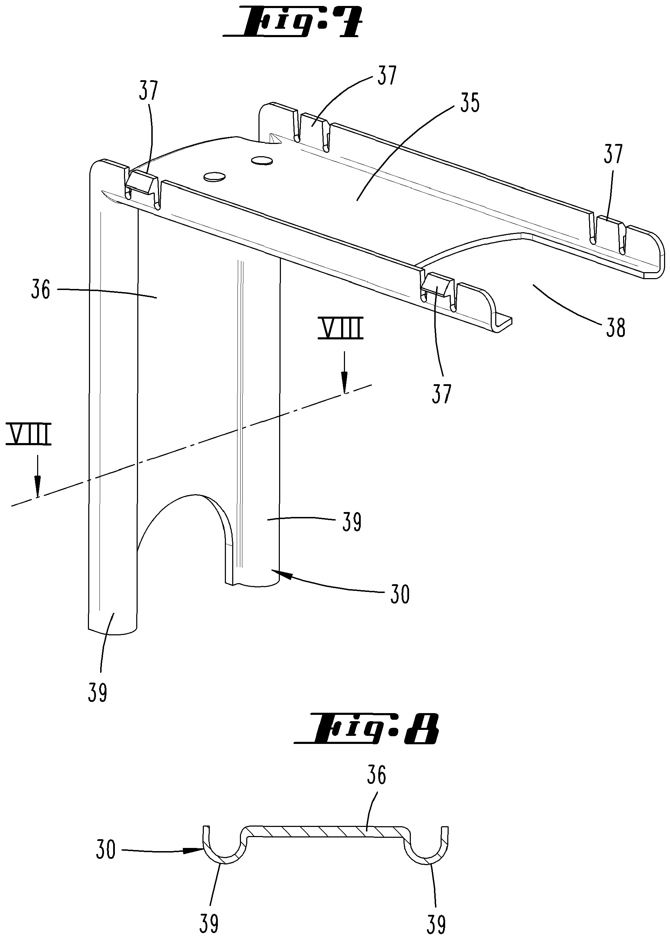

Die Umfassung 30 kann gemäß der Darstellung in Figur 7 ein Kunststoffspritzteil sein. Dieses ist zunächst und im Wesentlichen L-förmig gestaltet, mit einem gemäß Figur 5 im Wesentlichen parallel zum U-Steg 17 der Rollengabel 16 verlaufenden Umfassungssteg 35 sowie einen im Querschnitt rechtwinklig hierzu sich erstreckenden, im Wesentlichen parallel zu dem U-Schenkel 20 der Rollengabel 16 verlaufenden Umfassungsschenkel 36.

Die senkrecht zur Betrachtungsebene in Figur 5 gemessene Breite der Umfassung 30 ist bevorzugt geringer gewählt als die in selber Richtung betrachtete Breite der Rollengabel 16, insbesondere dessen U-Schenkel 20.

Der Umfassungssteg 35 ist mit Bezug auf einen Querschnitt quer zur Betrachtungsebene in Figur 5 im Wesentlichen U-förmig gebildet (vergleiche Figur 7).

Die bevorzugt parallel zueinander verlaufenden U-Stege weisen eine Querschnittslänge auf, die dem größten Durchmesser des Kabels 24 zumindest entspricht, bevorzugt den Durchmesser übertrifft.

Die U-Stege des Umfassungssteges 35 sind mit Rastmitteln 37 ausgebildet. Diese Rastmittel 37 können, wie dargestellt, Rastzungen sein, zur Rastfestlegung der Umfassung 30 an der Rollengabel 16.

Der bodenartige, mit Abstand zu dem U-Steg 17 der Rollengabel 16 verlaufende U-Schenkel des Umfassungssteges 35 ist in dem dem Umfassungsschenkel 36 abgewandten Endbereich mit einer fensterartigen Ausnehmung 38 versehen, zum Durchsatz des Kabels 24 im Bereich der Anbindung der Elektroschnittstelle 23 an der Rollengabel 16.

Der Umfassungsschenkel 36 liegt mit Bezug auf einen Querschnitt gemäß Figur 8 mit einem mittleren Abschnitt bevorzugt flächig innenseitig auf dem U-Schenkel 20 auf. Beidseitig dieses flächigen mittigen Abschnittes sind im Querschnitt halbkreisförmige Erweiterungen 39 ausgebildet, die zusammen mit der Innenwand des zugewandten U-Schenkels 20 Kanäle ausformen. Durch zumindest einen dieser Kabelkanäle ist das Kabel 24 zur Radachse 6 geführt.

Bezüglich des Lastenwagens 1 ist weiter ersichtlich ein Bediengerät 25 vorgesehen, das umgreifend zu dem Handhabungsbügel 3 angeordnet ist. Das Bediengerät 25 ist im Querschnitt im Wesentlichen kreisringförmig gebildet, mit einer mittigen, eine Längsachse x aufweisenden Durchgangsöffnung 34.

Bezüglich der Längserstreckung in Richtung des Handhabungsbügels 3 sind zugeordnet beiden Endseiten an dem Bediengerät 25 je ein Stellteil T in Form eines Betätigungsgriffes 26 ausgebildet. Er erstreckt sich über die durch die Klammer angedeutete Länge. Der Betätigungsgriff 26 kann um den Handhabungsbügel 3 auf einem Kreisbogen der sich in einer Ebene senkrecht zur Erstreckung des Handhabungsbügels 3 in diesem Bereich erstreckt, bewegt werden.

Mit jedem der Betätigungsgriffe 26 kann eine der angetriebenen Rollen 5 betätigt werden.

Die Rollen 5 können unabhängig voneinander angesteuert werden, sodass auch nur eine Rolle angetrieben werden kann und die andere nicht.

Eine elektrische Verbindung zwischen einer angetriebenen Rolle 5 und dem Bediengerät 25 kann sich, was hier durch das strichlinierte wiedergegebene Kabel 27 angedeutet ist, bezüglich des Handhabungsbügels 3 innerhalb des Handhabungsbügels 3 erstrecken. Der Handhabungsbügel 3 weist hierzu im Überdeckungsbereich des Bediengerätes 25 eine Durchführöffnung 40 auf.

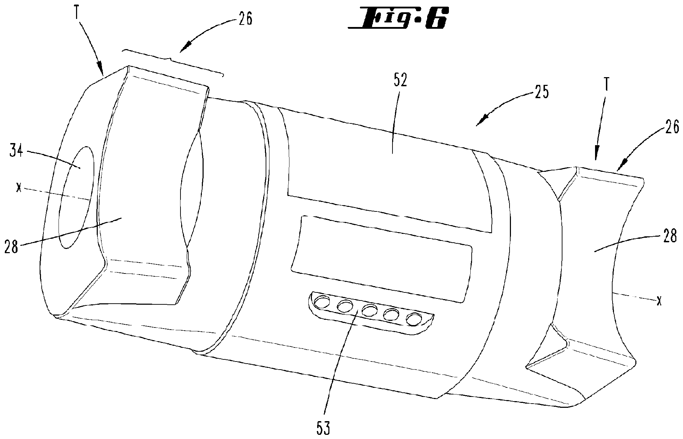

Mit Bezug zu Figur 6 ist das Bediengerät in Einzeldarstellung dargestellt. Ersichtlich ist ein Betätigungsgriff 26 in weiterer Einzelheit mit einer Konkavfläche 28 gebildet, deren Endbereiche zum Betätigen genutzt sein können. Die Betätigung kann in beiden Kreisrichtungen erfolgen. Einmal für einen Vorwärtsantrieb beispielsweise und einmal für einen Rückwärtsantrieb.

Die Konkavfläche 28 erstreckt sich bezüglich eines Umfangs des Handhabungsbügels in diesem Bereich über einen Umfangswinkel von beispielsweise 30 bis 270° bevorzugt ca. 120°.

Das Bedienteil 25 weist ein sich aus zwei fügbaren, halbschalenförmigen Teilen 41 und 42 zusammengesetztes feststehendes Teil auf. Diese sind über nicht dargestellte Schrauben unter Umfassung des Handhabungsbügels 3 gegeneinander verspannt. Die Schrauben durchsetzen hierbei entsprechend positionierte Bohrungen 43 im Handhabungsbügel 3. Das feststehende Teil des Bediengeräts 25 ist so sowohl in Axialrichtung des Handhabungsbügels 3 wie auch in dessen Umfangsrichtung an dem Handhabungsbügel 3 gehaltert.

Das feststehende Teil trägt eine Platine 44 mit der Steuerelektronik.

Weiter formt das feststehende Teil in Erstreckungsrichtung der durch die beiden Teile 41 und 42 zugleich gebildeten Durchgangsöffnung 34 jeweils endseitig, den zugewandten Abschnitt des Handhabungsbügels 3 umfassende Führungsabschnitte 45 aus.

Jedes Stellteil T beziehungsweise jeder Betätigungsgriff 26 setzt sich aus zwei gegeneinander zu verspannenden Halbschalenteilen 46 und 47 zusammen, sowie weiter aus einem insbesondere von dem Halbschalenteil 47 überdeckten Betätigungsteil 48.

Das Betätigungsteil 48 liegt bevorzugt formschlüssig insbesondere in dem Halbschalenteil 47 ein, zur drehgleitenden Zusammenwirkung mit dem zugeordneten Führungsabschnitt 45.

Über den Führungsabschnitt 45 ist das Betätigungsteil 48 und hierüber der Betätigungsgriff 26 in Axialrichtung des Handhabungsbügels 3 an dem feststehenden teil des Bediengerätes 25 gehaltert.

Das Betätigungsteil 48 wirkt mittels bevorzugt drei in Verlagerungsrichtung des Betätigungsteils 48 zueinander beabstandeten Magneten 54 auf, auf der Platine 44 angeordnete Hallsensoren 55 ein, wobei das Betätigungsteil 48 und somit der gesamte Betätigungsgriff 26 aus einer mittleren Ausgangsstellung heraus in beide Drehrichtungen um einen Drehwinkel von jeweils etwa 5 bis 10° drehverlagerbar ist.

In diese Ausgangsstellung ist das Stellteil T beziehungsweise der Betätigungsgriff 26 federvorgespannt.

An dem feststehenden Teil 42 sind jeweils zugeordnet einem Führungsabschnitt 45 zwei sich im Wesentlichen kreisabschnittförmig um den Führungsabschnitt 45 legende, in Axialrichtung nebeneinander und entgegengesetzt gerichtete Kontaktschenkel 49 befestigt. Deren freie Enden sind hammerartig verbreitert.

Gegen die, dem Kontaktschenkel 49 abgewandten freien Seiten der Hammerenden wirkt ein Radialfortsatz 50 des Betätigungsteiles 48. Mit einer Drehbewegung des Betätigungsgriffes 26 in eine Drehrichtung wird über einen Radialfortsatz 50 der entgegen der Drehrichtung sich erstreckende Kontaktschenkel 49 beaufschlagt, welcher in einem dem Hammerkopfende abgewandten Endbereich um eine Achse schwenkbar gelagert ist. Die Verschwenkung zufolge Beaufschlagung wird von der Magnet-/Hall-Sensor-Anordnung erfasst und als Steuersignal interpretiert. Die Drehverlagerung ist bevorzugt anschlagbegrenzt durch Anschlagen eines nach radial innen weisenden Anschlagfortsatz 51 gegen das Hammerende des anderen, sich in Drehrichtung erstreckenden Kontaktschenkels 49.

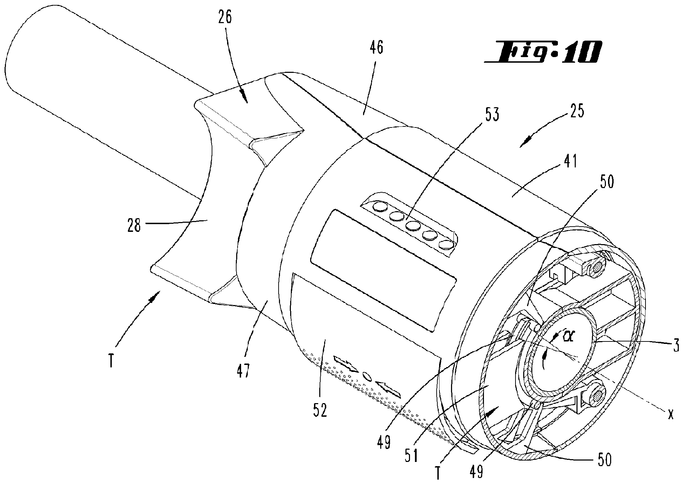

Der anschlagbegrenzte Drehwinkel der einen Drehrichtung ist in Figur 10 mit α bezeichnet. Der Drehwinkel in der entgegengesetzten Richtung (betrachtet aus der Ausgangsstellung) ist bevorzugt gleich groß gewählt.

Im Bereich der Achslagerung eines jeden Kontaktschenkels 49 kann beispielsweise eine Schenkelfeder angeordnet sein, die den Kontaktschenkel 49 und hierüber das Stellteil T in die Ausgangsstellung belastet.

Dargestellt ist weiter auch eine Not-Aus-Taste 52 in Form einer Pralltaste, mittels welcher ein eventuell noch laufender Motor einer angetriebenen Rolle ausgeschaltet werden kann. Diese Not-Aus-Taste 52 ist in dem zwischen den Betätigungsgriffen 26 feststehenden Abschnitt des Bediengerätes 25 vorgesehen.

Auch kann eine Akkumulator-Ladeanzeige 53 vorgesehen sein, so beispielsweise in Form einer Aneinanderreihung von LEDs.

Es ist auch bevorzugt, dass auf der Radachse 6, außenseitig zum dem Nabenmotor, weiter bevorzugt zwischen einem Kugellager 32 und der Rollengabel 16 bzw. dem Umfassungsteil 18 ein metallisches Scheibenteil 33 angeordnet ist. Das Scheibenteil 33 besteht bevorzugt aus Aluminium. Hiermit kann die Wärmekontaktfläche zu der Rollengabel 16 und/oder dem Umfassungsteil 18 günstig vergrößert werden.

**Bezugszeichenliste:**

| | | | |
|---|---|---|---|
| 1 | Lastenwagen | 25 | Bediengerät |
| 2 | Ladefläche | 26 | Betätigungsgriff |
| 3 | Handhabungsbügel | 27 | Kabel |
| 4 | Rolle | 28 | Konkavfläche |
| 5 | Rolle | 29 | Übergreifabschnitt |
| 6 | Radachse | 30 | Umfassung |
| 7 | Nabenkörper | 31 | Rad |
| 8 | Seitenwand | 32 | Kugellager |
| 9 | Umfangswand | 33 | Scheibenteil |
| 10 | Lauffläche | 34 | Durchgangsöffnung |
| 11 | Laufflächenträger | 35 | Umfassungssteg |
| 12 | Aufeinanderlage | 36 | Umfassungsschenkel |
| 13 | Topfwandung | 37 | Rastmittel |
| 14 | Topfboden | 38 | Ausnehmung |
| 15 | Umfangsrippe | 39 | Erweiterung |
| 16 | Rollengabel | 40 | Durchführöffnung |
| 17 | U-Steg | 41 | Teil |
| 18 | Umfassungsteil | 42 | Teil |
| 19 | Nabenmotor | 43 | Bohrung |
| 20 | U-Schenkel | 44 | Platine |
| 21 | Verbindungsschraube | 45 | Führungsabschnitt |
| 22 | Sichtöffnung | 46 | Halbschalenteil |
| 23 | Elektroschnittstelle | 47 | Halbschalenteil |
| 24 | Kabel | 48 | Betätigungsteil |
| 49 | Kontaktschenkel | | |
| 50 | Radialfortsatz | | |
| 51 | Anschlagfortsatz | | |
| 52 | Not-Aus-Taste | | |
| 53 | Akkumulator-Ladestandanzeige | | |
| 54 | Magnet | | |
| 55 | Hall-Sensor | | |
| | | | |
| H | Höhe | | |
| M | Längsmittelachse | | |
| T | Stellteil | | |
| | | | |
| h | vertikale Höhe | | |
| x | Längsachse | | |
| | | | |
| α | Winkel | | |

## Patentansprüche

1. Rolle mit einem von einem Elektromotor angetriebenen Rad (31) mit einer Rollenachse (6), wobei der Elektromotor ein Nabenmotor (19) ist, der einen sich mit Umfangsabstand und umgebend zu der Radachse (6) erstreckenden Nabenkörper (7) relativ zu der feststehenden Radachse (6) antreibt, wobei weiter das Rad (31) eine Lauffläche (10) aufweist, **dadurch gekennzeichnet, dass** die Lauffläche (10) auf einem Laufflächenträger (11) ausgebildet ist und der Laufflächenträger (11) rückseitig zu der Lauffläche (10) auf dem Nabenkörper (7) flächig abgestützt ist.

2. Rolle nach Anspruch 1, **dadurch gekennzeichnet, dass** der Laufflächenträger (11) topfartig ausgebildet ist, wobei ein Topfboden (14) sich außenseitig zu dem Nabenkörper (7) und im Wesentlichen rechtwinklig zur Radachse (6) erstreckt.

3. Rolle nach einem der vorhergehenden Ansprüche, **dadurch gekennzeichnet, dass** der Laufflächenträger (11) eine oder mehrere, einen Teil der Außenfläche des Laufflächenträgers (11) bildende Rippen (15) aufweist, wobei, bevorzugt, eine Rippe (15) umlaufend ausgebildet ist.

4. Rolle nach einem der vorhergehenden Ansprüche, **dadurch gekennzeichnet, dass** eine Rollengabel (16) vorgesehen ist und dass die Rollengabel (16) aus einem Blechteil gebildet ist, das eine Breite aufweist, die dem 10-Fachen oder mehr, bis hin beispielsweise zum 200- oder 300-Fachen einer Dicke des Blechteils entspricht.

5. Rolle nach Anspruch 4, **dadurch gekennzeichnet, dass**, die Rollengabel (16) U-förmig gebildet ist.

6. Rolle nach einem der vorhergehenden Ansprüche, **dadurch gekennzeichnet, dass** ein horizontal ausgerichtetes Umfassungsteil (18) vorgesehen ist.

7. Rolle nach Anspruch 6, **dadurch gekennzeichnet, dass** das Umfassungsteil (18) aus einem Blechteil gebildet ist, das eine Breite aufweist, die dem 10-Fachen oder mehr, bis hin beispielsweise zum 200- oder 300-Fachen der Dicke des Blechteils entspricht.

8. Rolle nach einem der Ansprüche 6 oder 7, **dadurch gekennzeichnet, dass** das Umfassungsteil (18) sich vertikal nur über einen Teil der Höhe (H) der Rolle (5) oder der Rollengabel (16) erstreckt und/oder, das Umfassungsteil (18) und/ oder die Rollengabel (16) mit einem oder beiden Enden der Radachse (6) verbunden sind.

9. Rolle nach einem der Ansprüche 4 bis 8, **dadurch gekennzeichnet, dass** eine elektrische Schnittstelle (23) zu dem Elektromotor an dem Umfassungsteil (18) oder der Rollengabel (16) ausgebildet ist, wobei, bevorzugt, die Schnittstelle (23) als Steckeraufnahme ausgebildet ist.

10. Rolle nach Anspruch 9, **dadurch gekennzeichnet, dass** ein die Schnittstelle (23) mit dem Elektromotor verbindendes Kabel (24) innenseitig des Umfassungsteils (18) oder der Rollengabel (16) verläuft.

11. Auch von Hand verfahrbarer Lastenwagen (1) mit einer oder mehreren Rollen (4, 5), von denen mindestens eine Rolle (5) ein angetriebenes Rad (31) aufweist, **gekennzeichnet durch** eine Ausbildung der Rolle (5) nach einem der vorhergehenden Ansprüche, wobei, bevorzugt, eine Rolle (5) hinsichtlich einer Leistungsabgabe des Elektromotors steuerbar ist und/oder, an dem Lastenwagen (1) ein Bediengerät (25) angeordnet ist.

12. Lastenwagen nach Anspruch 11, **dadurch gekennzeichnet, dass** zwei Rollen (5) mit jeweils angetriebenen Rädern (31) vorgesehen sind, wobei, bevorzugt, die jedenfalls zwei mit angetriebenen Rädern (31) ausgebildeten Rollen (5) unabhängig voneinander steuerbar sind.

13. Lastenwagen nach einem der Ansprüche 11 oder 12, **dadurch gekennzeichnet, dass** der Lastenwagen (1) einen Handhabungsbügel (3) aufweist und dass das Bediengerät (25) an dem Handhabungsbügel (3) angebracht ist, wobei, bevorzugt, der Handhabungsbügel (3) das Bediengerät (25) durchsetzt.

14. Lastenwagen nach einem der Ansprüche 11 bis 13, **dadurch gekennzeichnet, dass** das Bediengerät (25) sich in einem Querschnitt im Wesentlichen kreisringförmig zu dem Handhabungsbügel (3) erstreckt.

15. Lastenwagen nach einem der Ansprüche 11 bis 14, **dadurch gekennzeichnet, dass** eine elektrische Verbindung zwischen einer Rolle (5) mit angetriebenem Rad (31) und dem Bediengerät (25) innerhalb des Handhabungsbügels (3) verlegt ist, gegebenenfalls unter Zwischenschaltung eines Verbindungsgehäuses.

## Claims

1. A roller with a wheel (31) that is driven by an electric motor and has a wheel axle (6), wherein the electric motor is a hub motor (19) that drives a hub body (7) surrounding the wheel axle (6) with circumferential spacing relative to the stationary wheel axle (6), and wherein the wheel (31) furthermore features a running surface (10), **characterized in that** the running surface (10) is realized on a running surface carrier (11) and the running surface carrier (11) is supported on the hub body (7) in a planar fashion on the rear side of the running surface (10).

2. The roller according to claim 1, **characterized in that** the running surface carrier (11) is realized in a pot-like fashion, wherein a pot bottom (14) extends outside the hub body (7) and essentially perpendicular to the wheel axle (6).

3. The roller according to one of the preceding claims, **characterized in that** the running surface carrier (11) features one or more ribs (15) that form part of the outer surface of the running surface carrier (11) whereby, preferably the rib (15) is realized circumferentially.

4. The roller according to one of the preceding claims, **characterized in that** a roller fork (16) is provided, and **in that** the roller fork (16) is made of a sheet metal part with a width corresponding to 10-times the thickness of the sheet metal part or more, for example, up to 200-times or 300-times the thickness of the sheet metal part.

5. The roller according to claim 4, **characterized in that** the roller fork (16) is realized in a U-shaped fashion.

6. The roller according to one of the preceding claims, **characterized in that** a horizontally aligned enclosure part (18) is provided.

7. The roller according to claim 6, **characterized in that** the enclosure part (18) is made of a sheet metal part with a width corresponding to 10-times the thickness of the sheet metal part or more, for example, up to 200-times or 300-times of the thickness of the sheet metal part.

8. The roller according to claim 6 or 7, **characterized in that** the enclosure part (18) vertically extends only over part of the height H of the roller (5) or the roller fork (16) and/ or that the enclosure part (18) and/or the roller fork (16) is/ are connected to one or both ends of the wheel axle (6).

9. The roller according to one of claims 4-8, **characterized in that** an electrical interface (23) with the electric motor is realized on the enclosure part (18) or the roller fork (16), whereby, preferably, the interface (23) is realized in the form of a plug socket.

10. The roller according to claim 9, **characterized in that** a cable (24) connecting the interface (23) to the electric motor extends on the inner side of the enclosure part (18) or the roller fork (16).

11. A load truck (1) that can also be maneuvered manually and features one or more rollers (4, 5), of which at least one roller (5) features a driven wheel (31), **characterized by** a design of the roller (5) with one or more of the characteristics of one of the preceding claims, whereby, preferably a roller (5) can be controlled with respect to the power output of the electric motor and/or that a control device (25) is arranged on the load truck (1).

12. The load truck according to claim 11, **characterized in that** two rollers (5) with respectively driven wheels (31) are provided, whereby, preferably two rollers (5) realized with driven wheels (31) can in any case be controlled independently of one another.

13. The load truck according to one of claims 11 or 12, **characterized in that** the load truck (1) features a handle bar (3), and **in that** the control device (25) is arranged on the handle bar (3), whereby, preferably the handle bar (3) extends through the control device (25).

14. The load truck according to one of claims 11 to 13, **characterized in that** the control device (25) essentially extends annular to the handle bar (3) in a cross section.

15. The load truck according to one of claims 11 to 14, **characterized in that** an electrical connection between a roller (5) with a driven wheel (31) and the control device (25) is installed within the handle bar (3), if applicable, with an intermediately arranged junction box.

## Revendications

1. Rouleau (5) avec une roue (31) entraînée par un moteur électrique et comportant un axe de rouleau (6), dans lequel le moteur électrique est un moteur de moyeu (19) lequel entraîne relativement à l'axe de roue fixe (6) un corps de moyeu (7) qui s'étend avec un espacement circonférentiel autour de l'axe de roue (6), dans lequel en outre la roue (31) présente une surface de roulement (10), **caractérisé en ce que** la surface de roulement (10) est formée sur un support de surface de roulement (10) et le support de surface de roulement (11) est supporté de manière surfacique sur le corps de moyeu (7) sur le côté arrière de la surface de roulement (10).

2. Rouleau selon la revendication 1, **caractérisé en ce que** le support de surface de roulement (11) est réalisé en forme de pot, dans lequel un fond de pot (14) s'étend à l'extérieur du corps de moyeu (7) et de manière sensiblement perpendiculaire à l'axe de roue (6) .

3. Rouleau selon l'une des revendications précédentes, **caractérisé en ce que** le support de surface de roulement (11) comporte une ou plusieurs nervures (15) qui forment une partie de la surface extérieure du support de surface de roulement (11), dans lequel, de préférence, une nervure (15) est réalisée circonférentiellement.

4. Rouleau selon l'une des revendications précédentes, **caractérisé en ce qu'**est prévue une fourche à rouleau (16) et **en ce que** la fourche à rouleau (16) est formée par une pièce en tôle laquelle a une largeur correspondant à 10 fois l'épaisseur de la pièce en tôle ou plus, jusqu'à par exemple 200 fois ou 300 fois son épaisseur.

5. Rouleau selon la revendication 4, **caractérisé en ce que** la fourche à rouleau (16) est réalisée en forme de U.

6. Rouleau selon l'une des revendications précédentes, **caractérisé en ce qu'**est prévue une partie enceignante (18) orientée horizontalement.

7. Rouleau selon la revendication 6, **caractérisé en ce que** la partie enceignante (18) est formée par une pièce en tôle laquelle a une largeur correspondant à 10 fois l'épaisseur de la pièce en tôle ou plus, jusqu'à par exemple 200 ou 300 fois son épaisseur.

8. Rouleau selon la revendication 6 ou 7, **caractérisé en ce que** la partie enceignante (18) s'étend verticalement sur une partie seulement de la hauteur (H) du rouleau (5) ou de la fourche à rouleau (16) et/ou **en ce que** la partie enceignante (18) et/ou la fourche à rouleau (16) sont liées à une extrémité de l'axe de roue (6) ou aux deux.

9. Rouleau selon l'une des revendications 4 à 8, **caractérisé en ce qu'**une interface électrique (23) avec le moteur électrique est formée sur la partie enceignante (18) ou sur la fourche à rouleau (16), dans lequel, de préférence, l'interface (23) est réalisée en tant que prise de raccordement.

10. Rouleau selon la revendication 9, **caractérisé en ce qu'**un câble (24) raccordant l'interface (23) avec le moteur électrique s'étend côté intérieur de la partie enceignante (18) ou de la fourche à rouleau (16).

11. Chariot pour charges (1) pouvant aussi être déplacé manuellement, comprenant un ou plusieurs rouleaux (4, 5) dont au moins un rouleau (5) comporte une roue entrainée (31), **caractérisé par** une réalisation de rouleau (5) selon l'une des revendications précédentes, dans lequel, de préférence, un rouleau (5) peut être commandé par rapport à la puissance de sortie du moteur électrique et/ou en ce qu'un dispositif de commande (25) est agencé sur le chariot (1).

12. Chariot selon la revendication 11, **caractérisé en ce que** sont prévus deux rouleaux (5) chacun à roues entrainées (31), dans lequel, de préférence, au moins les deux rouleaux à roues entrainées (31) peuvent être commandés indépendamment l'un de l'autre.

13. Chariot selon l'une des revendications 11 ou 12, **caractérisé en ce que** le chariot (1) comprend une barre de manoeuvre manuelle (3) et **en ce que** le dispositif de commande (25) est monté sur la barre de manoeuvre manuelle, dans lequel, de préférence, la barre de manoeuvre manuelle (3) traverse le dispositif de commande (25).

14. Chariot selon l'une des revendications 11 à 13, **caractérisé en ce que** le dispositif de commande (25) s'étend, dans une section transversale, de manière sensiblement annulaire à la barre de manoeuvre manuelle (3).

15. Chariot selon l'une des revendications 11 à 14, **caractérisé en ce qu'**une liaison électrique entre un rouleau (5) à roue entraînée (31) et le dispositif de commande (25) est placée à l'intérieur de la barre de manoeuvre manuelle (3), le cas échéant avec interposition d'un boîtier de liaison.
